# EUROPÄISCHE PATENTSCHRIFT

(11) **EP 2 999 559 B1**
(45) Veröffentlichungstag und Bekanntmachung des Hinweises auf die Patenterteilung: **04.09.2019**
(21) Anmeldenummer: 14719273.6
(22) Anmeldetag: 17.04.2014
(51) Int. Cl.: B21D 22/00, B32B 15/01, B21D 35/00

(54) **UMFORMVERFAHREN FÜR EIN METALLTEIL HOHER WERKSTOFFHÄRTE**
METHOD FOR FORMING A METAL PART OF HIGH HARDNESS
PROCÉDÉ DE FAÇONNAGE POUR UNE PIÈCE MÉTALLIQUE DE GRANDE DURETÉ

(30) Priorität: 23.05.2013 DE 102013209537
(43) Veröffentlichungstag der Anmeldung: 30.03.2016
(73) Patentinhaber: Bayerische Motoren Werke Aktiengesellschaft, 80809 München (DE)
(72) Erfinder: GRASMEIER, Johannes, 84130 Dingolfing (DE)
(86) Internationale Anmeldenummer: PCT/EP2014/057856
(87) Internationale Veröffentlichungsnummer: WO 2014/187622

(56) Entgegenhaltungen:
- EP-A2- 2 147 958
- WO-A1-2009/135779
- DE-A1- 4 303 884
- DE-A1- 4 307 563
- DE-A1- 19 621 944
- DE-B3- 10 330 148

## Beschreibung

Die Erfindung bezieht sich auf ein Verfahren zum Umformen eines Metallteils hoher Werkstoffhärte sowie auf ein umformbares Metallteil dieser Art, nach dem Oberbegriff des Patentanspruchs 1 bzw. 6.

Derartige Metallteile, wie sie wegen ihres Leichtbaupotenzials als hoch- oder höchstfeste Stahl-Formteile z. B. an Kraftfahrzeugkarosserien Verwendung finden, besitzen eine geringe Bruchfestigkeit und müssen daher, bevor sie zu einem Formteil verpresst werden, auf einen duktilen Gefügezustand erhitzt und nach der Umformung einem erneuten Härtungsprozess unterzogen werden.

Eine alternative Umformmethode besteht darin, solche Metallbleche zunächst mit einer noch geringen Ausgangshärte kalt zu verformen und die so hergestellten Formteile dann in einem separaten Härtungsprozess nachzubehandeln.

Diese bekannten Umformverfahren erfordern einen unerwünscht hohen Fertigungsmittel- und Herstellungsaufwand.

Aus dem Dokument WO 2009/135779 A1 ist eine Verwendung bekannt eines mehrlagigen, mittels Walzplattieren hergestellten, haspelbaren, metallischen Verbundwerkstoffs in einer Fahrzeugstruktur, insbesondere Karosseriestruktur, wobei der Verbundwerkstoff ein Leichtbauverbundwerkstoff ist und drei Lagen aus einer Stahllegierung aufweist, wobei wenigstens eine der Lagen aus einer höherfesten oder höchstfesten Stahllegierung gefertigt ist.

Aus dem Dokument EP 2 147 958 A2 ist ein Verfahren bekannt zur Herstellung eines Sandwich-Bauteils aus Kaltband, welches durch Kaltwalzen, Rekristallisationsglühen und Abkühlen von Stahlband erhalten wird, wobei auf das Kaltband eine weitere Funktionsschicht aufgebracht ist, wobei die folgenden Verfahrensschritte durchgeführt werden: Abkühlen des Kaltbandes nach dem Walzen und Rekristallisationsglühen, Aufbringen einer Klebstofflage auf das abgekühlte Kaltband, Aufbringen der Funktionsschicht auf die Klebstofflage, Aufrollen des Kaltbandes mit der aufgebrachten Klebstofflage und Funktionsschicht zu einem Coil sowie Abrollen des Coils und mechanisches Umformen des Kaltbandes mit der aufgebrachten Klebstofflage und Funktionsschicht zu einem Sandwich-Bauteil.

Aus dem Dokument DE 43 07 563 A1 ist ein Verfahren bekannt zum Fertigen eines Blechstrukturteiles, das partiell eine Doppelblechstruktur, bestehend aus einem Grundblech und stellenweise zumindest einem damit verbundenen Verstärkungsblech aufweist, wobei Grundblech und Verstärkungsblech(e) gemeinsam tiefgezogen oder formgestanzt werden, wobei das Verstärkungsblech vor dem gemeinsamen Tiefziehen oder Formstanzen zumindest teilweise am Grundblech befestigt und nach dem Tiefziehen oder Formstanzen abschließend unlösbar mit dem Grundblech verbunden wird.

Aus dem Dokument DE 43 03 884 A1 ist ein Verfahren bekannt zur Herstellung von Maschinenbauteilen, insbesondere Wälzlagerelementen, deren mechanisch beanspruchte Flächen aus einem Stahl mit erhöhtem Kohlenstoffgehalt und deren tragende Teile aus einem niedrig legiertem Stahl mit geringem Kohlenstoffgehalt bestehen, wobei ein Kernmaterial mit einem geringen Kohlenstoffgehalt wenigstens einseitig mit einem Auflagematerial mit erhöhtem Kohlenstoffgehalt im Kaltwalzverfahren walzplattiert wird, dieser Werkstoffverbund gehärtet und angelassen wird, sodass das Auflagematerial eine Härte von 300 bis 550 HV und das Kernmaterial eine Härte bis 250 HV aufweist und anschließend der Werkstoffverbund durch eine ein- oder mehrstufige Kaltumformung umgeformt wird. Aufgabe der Erfindung ist es, ein Verfahren und ein Metallteil der eingangs genannten Art so auszubilden, dass der Fertigungsmittel- und Herstellungsaufwand für das daraus hergestellte Formteil ohne Beeinträchtigung der hoch- oder höchstfesten Werkstoffkennwerte deutlich verringert wird.

Diese Aufgabe wird erfindungsgemäß durch das im Patentanspruch 1 gekennzeichnete Verfahren bzw. das im Patentanspruch 6 gekennzeichnete Metallteil gelöst.

Erfindungsgemäß wird durch die lastfeste Anbindung einer duktilen Deckschicht an die verformungskritischen Bereiche des hoch- oder höchstfesten, zugleich aber spröden Metallteils sichergestellt, dass dieses im Zustand hoher Werkstoffhärte ohne aufwändige Warmverformung und/oder zeitintensive Nachhärtung bruchfrei zu einem Formteil verpresst wird, mit dem weiteren, für das Leichtbaupotenzial der beanspruchten Werkstoffpaarung wesentlichen Aspekt, dass die Deckschicht lediglich zum Abbau brucherzeugender Spannungsspitzen im Metallteil vorgesehen und daher mit einem entsprechend geringen Gewichtseinsatz für die Deckschicht die Bruchfestigkeit des Formteils auf gewichtsmäßig hocheffektive Weise ohne nachteilige Auswirkung auf die übrigen, gewichtsmäßig günstigen Materialkennwerte des Metallteils signifikant erhöht wird.

Um die bruchfreie Umformbarkeit des Metallteils nicht auf bestimmte Flächenbereiche und Verformungsrichtungen zu beschränken, aber auch aus Herstellungsgründen empfiehlt es sich, das Metallteil beidseitig mit der duktilen Deckschicht zu versehen.

Für die lastfeste Anbindung der duktilen Deckschicht an das Metallteil stehen zahlreiche Fügemethoden zur Verfügung. So ist es denkbar, das Metallteil durch eine Gefügeumwandlung von Seiten der Oberfläche aus so zu behandeln, dass sich in den Randzonen des Metallteils die duktile Deckschicht aus-bildet, die dann einstückig in das spröde Grundmaterial des Metallteils über-geht. Auf fertigungsmäßig einfache Weise werden das Metallteil und die Deck-schicht jedoch vorzugsweise gesondert vorgefertigt und vor der Kaltumformung, etwa mit Hilfe eines Strukturklebers, lastfest miteinander verklebt.

Als besonders günstig und vor allem problemlos miteinander kompatibel hat sich eine Werkstoffkombination mit einem Metallteil aus einem hoch- oder höchstfesten Stahlblech und einer Deckschicht aus einem Ziehstahlblech mit einer vielfach höheren Duktilität, aber einer wesentlich geringeren Zugfestigkeit als das Metallteil erwiesen.

Ein vorteilhafter Nebeneffekt des erfindungsgemäßen Werkstoffverbunds ergibt sich daraus, dass Metallteile der beanspruchten Art im Allgemeinen eine reduzierte Schweißbarkeit aufweisen und sich daher Anbauteile im Wege einer Schmelzfügeverbindung, wenn überhaupt, nur auf aufwändige Weise an einem solchen Metallteil befestigen lassen. Hingegen ist eine Schmelzfüge- und insbesondere Schweißverbindung eines Anbauteils mit der duktilen Deckschicht des Metallteils, wie bevorzugt, problemlos herstellbar.

Die Erfindung wird nunmehr anhand eines Ausführungsbeispiels in Verbindung mit den Zeichnungen näher erläutert. Es zeigen in stark schematisierter Darstellung:
- Fig. 1: eine perspektivische Ansicht eines erfindungsgemäß gestalteten Verbundbauteils, bestehend aus einem hochfesten Innenblech und beidseitig mit diesem verbundenen, duktilen Deckschichten, im unverformten Zustand; und
- Fig. 2: eine geschnittene Darstellung des in Fig. 1 gezeigten Verbund-bauteils nach der Umformung, mit einem mit der Deckschicht verschweißten Anbauteil.

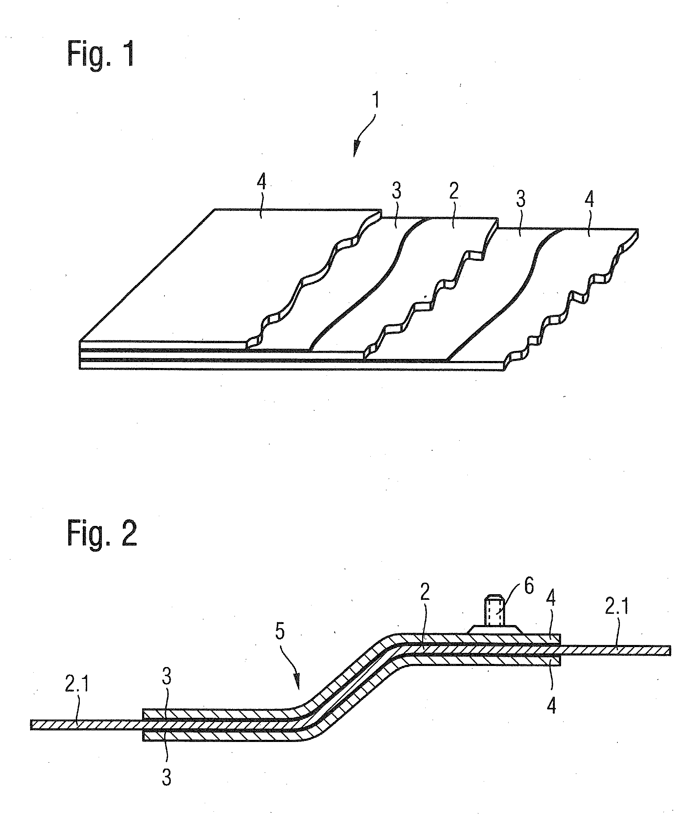

Das in Fig. 1 gezeigte, noch unverformte Verbundbauteil 1 besteht aus einem mittleren, hoch- oder höchstfesten, aber spröden Metallteil 2 in Form eines Dünnblechs aus Stahl mit einer Zugfestigkeit in der Größenordnung von 1000 MPa und beidseitig mit diesem, etwa über eine Strukturklebeschicht 3, lastfest verklebten, duktilen Deckschichten 4 ebenfalls in Form von Dünnblechen, aber aus einem gut verformbaren Ziehstahl mit einer wesentlich geringeren Zugfestigkeit als das mittlere Stahlblech 2.

In Fig. 2, in der das Verbundteil 1 nach der Kaltumformung zu einem Mehrblech-Formteil 5 dargestellt ist, ist an Hand eines Ausführungsbeispiels gezeigt, dass sich die duktilen Deckschichten 4 nicht über die Gesamtfläche des mittleren Metallteils 2 erstrecken, sondern lediglich über die bei einer Kaltverformung in einem - nicht gezeigten - Presswerkzeug biegeverformten Blechbereiche. Auf diese Weise wird sichergestellt, dass das Metallteil 2 bruchfrei verformt und darüber hinaus auch noch das Leichtbaupotenzial des Verbund- bzw. Formteils 1, 5 weiter verbessert wird.

Ein zusätzlicher Vorteil der Deckschichtanbindung besteht dann, dass sich an der Deckschicht 4 ohne Weiteres Anbauteile 6 im Wege einer Schmelzfügeverbindung befestigen und insbesondere verschweißen lassen, was in einem deckschichtfreien, hoch- oder höchstfesten Stahlblech 2, also gemäß Fig. 2 den Stahlblechbereichen 2.1, wegen deren reduzierter Schweißbarkeit nicht möglich ist.

## Patentansprüche

1. Verfahren zum Umformen eines Metallteils (2) hoher Werkstoffhärte, wobei das Metallteil im unverformten Zustand zumindest einseitig im dem bei der Umformung zugbelasteten Bereich lastfest mit einer Deckschicht (4) aus einem duktilen metallischen Werkstoff versehen wird, **dadurch gekennzeichnet, dass** sich die duktile Deckschicht (4) nicht über die Gesamtfläche des Metallteils erstreckt, sondern lediglich über die bei einer Kaltverformung in einem Presswerkzeug biegeverformten Blechbereiche, und das so gefertigte Verbundteil (1) im Zustand hoher Werkstoffhärte des Metallteils kaltverformt wird.

2. Verfahren nach Anspruch 1, **dadurch gekennzeichnet, dass** das Metallteil (2) beidseitig mit einer duktilen Deckschicht (4) versehen wird.

3. Verfahren nach Anspruch 1 oder 2, **dadurch gekennzeichnet, dass** das Metallteil (2) und die duktile Deckschicht (4) vor der Kaltumformung miteinander lastfest verklebt werden.

4. Verfahren nach einem der vorhergehenden Ansprüche, **dadurch gekennzeichnet dass** das Metallteil (2) aus einem hochfesten Stahlblech und die Deckschicht (4) aus einem Ziehstahl besteht.

5. Verfahren nach einem der vorhergehenden Ansprüche, **dadurch gekennzeichnet dass** an der Deckschicht (4) des kaltverformten Verbundteils (1) im Wege einer Schmelzfügeverbindung zumindest ein Anbauteil (6) angebracht wird.

6. Metallteil hoher Werkstoffhärte, wobei das Metallteil (2) dadurch im Zustand hoher Werkstoffhärte kaltverformbar ist, dass zumindest in dem bei der späteren Umformung zugbelasteten Bereich des unverformten Metallteils eine gemeinsam mit diesem umgeformte Deckschicht (4) aus einem duktilen Material lastfest angeordnet ist, **dadurch gekennzeichnet, dass** sich die duktile Deckschicht (4) nicht über die Gesamtfläche des Metallteils erstreckt, sondern lediglich über die bei einer Kaltverformung in einem Presswerkzeug zur Biegeverformung vorgesehenen Blechbereiche.

## Claims

1. A method for shaping a metal part (2) of high material hardness, wherein the metal part in the non-deformed state, at least on one side in that region which is under tensile load during the shaping, is provided in load-resistant manner with a cover layer (4) made of a ductile metallic material, **characterised in that** the ductile cover layer (4) does not extend over the entire surface of the metal part, but merely over those metal sheet regions which have undergone bending deformation upon cold deformation in a pressing tool, and the composite part (1) thus manufactured is cold-deformed in the state of high material hardness of the metal part.

2. A method according to Claim 1, **characterised in that** the metal part (2) is provided on both sides with a ductile cover layer (4).

3. A method according to Claim 1 or Claim 2, **characterised in that** the metal part (2) and the ductile cover layer (4) prior to the cold forming are bonded together in load-resistant manner.

4. A method according to one of the preceding claims, **characterised in that** the metal part (2) consists of a high-strength steel sheet, and the cover layer (4) of a drawing steel.

5. A method according to one of the preceding claims, **characterised in that** at least one attachment part (6) is attached to the cover layer (4) of the cold-deformed composite part (1) by way of a melt join.

6. A metal part of high material hardness, wherein the metal part (2) can be cold-deformed in the state of high material hardness in that at least in that region of the non-deformed metal part which is under tensile load during the later shaping a cover layer (4), which is shaped jointly therewith, made of a ductile material is arranged in load-resistant manner, **characterised in that** the ductile cover layer (4) does not extend over the entire surface of the metal part, but merely over those metal sheet regions which are provided for bending deformation upon cold deformation in a pressing tool.

## Revendications

1. Procédé de formage d'une pièce métallique (2) de grande dureté de matériau,
selon lequel, la pièce métallique comporte à l'état non déformé, au moins d'un côté, dans la zone sollicitée en traction lors du formage, une couche de recouvrement (4), en un matériau métallique ductile résistant à la charge,
**caractérisé en ce que**
la couche de recouvrement ductile (4) ne s'étend pas sur la totalité de la surface de la pièce métallique, mais uniquement sur les zones de tôle déformées par flexion lors d'une déformation à froid dans un outil de compression, et la pièce composite (1) ainsi obtenue est déformée à froid à l'état de grande dureté de matériau de la pièce métallique.

2. Procédé conforme à la revendication 1,
**caractérisé en ce que**
la pièce métallique (2) est équipée sur ses deux faces d'une couche de recouvrement ductile (4).

3. Procédé conforme à la revendication 1 ou 2,
**caractérisé en ce que**
la pièce métallique (2) et la couche de recouvrement ductile (4) sont collées de façon résistant à la charge avant le formage à froid.

4. Procédé conforme à l'une des revendications précédentes,
**caractérisé en ce que**
la pièce métallique (2) est constituée d'une tôle en acier de grande résistance et la couche de recouvrement (4) est constituée d'un acier d'étirage.

5. Procédé conforme à l'une des revendications précédentes,
**caractérisé en ce qu'**
au moins une pièce de montage (6) est installée sur la couche de recouvrement (4) de la pièce composite déformée à froid (1) au moyen d'une jonction par fusion.

6. Pièce métallique en un matériau de grande dureté,
cette pièce métallique (2) pouvant être déformée à froid dans un état de grande dureté de matériau de sorte qu'au moins dans la zone de la pièce métallique non déformée sollicitée en traction lors du formage ultérieur, une couche de recouvrement (4) en un matériau ductile résistant à la charge mise en forme conjointement à celle-ci soit installée,
**caractérisé en ce que**
la couche de recouvrement ductile (4) ne s'étend pas sur la totalité de la surface de la pièce métallique mais uniquement sur les zones de tôle destinées à être déformées par flexion lors d'une déformation à froid dans un outil de compression.
